# EUROPÄISCHE PATENTANMELDUNG

(11) **EP 3 482 631 A1**
(43) Veröffentlichungstag der Anmeldung: **15.05.2019**
(21) Anmeldenummer: 18401086.6
(22) Anmeldetag: 30.10.2018
(51) Int. Cl.: A01M 7/00, A01B 73/06

(54) **STEUER- UND/ODER REGELSYSTEM FÜR EIN LANDWIRTSCHAFTLICHES NUTZFAHRZEUG, LANDWIRTSCHAFTLICHES NUTZFAHRZEUG UND VERFAHREN ZUR STEUERUNG UND/ODER REGELUNG DAFÜR**

(30) Priorität: 09.11.2017 DE 102017126201
(71) Anmelder: Amazonen-Werke H. Dreyer GmbH & Co. KG, 49205 Hasbergen (DE)
(72) Erfinder: Austermann, Stefan, 48291 Telgte (DE); Oberheide, Friedrich, 49143 Bissendorf (DE); Klemann, Timo, 49191 Belm (DE); große Prues, Frank, 49593 Bersenbrück (DE); Heer, Jochen, 49074 Osnabrück (DE)

(57) **Zusammenfassung**

Steuer- und/oder Regelsystem für ein landwirtschaftliches Nutzfahrzeug (1) mit einem sich quer erstreckenden Verteilergestänge (3), das ein Mittelteil (4) und zwei seitliche Ausleger (5) mit mehreren zueinander in Transportstellung einklappbaren und in Arbeitsstellung ausklappbaren, durch Gelenke verbundene Gestängeabschnitte (6) aufweist. Jedem Gestängeabschnitt ist eine Stelleinrichtung, umfassend wenigstens eine Schaltventileinheit und wenigstens eine Stell-Ventileinheit, zugeordnet, wodurch das Verteilergestänge von einer Transportstellung in eine Arbeitsstellung überführbar ist und die Gelenke in der Arbeitsstellung durch eine Haltekraft fixierbar sind. Eine Datenverarbeitungseinheit ist mit der jeweiligen Stelleinrichtung signalverbunden oder signalverbindbar und derart konfiguriert, dass mittels eines Stellsignals die Haltekraft der Gelenke durch die Stelleinrichtung aufgebracht wird, wobei die Haltekraft auf einen Maximalwert zur Begrenzung der Überlastung der Stelleinrichtung und/oder zur Begrenzung von am Verteilergestänge auftretenden Kräften einstellbar ist. Die Erfindung betrifft weiterhin ein landwirtschaftliches Nutzfahrzeug und ein Verfahren mit diesem Steuer- und/oder Regelsystem.

## Beschreibung

Die Erfindung betrifft ein Steuer- und/oder Regelsystem für ein landwirtschaftliches Nutzfahrzeug gemäß dem Patentanspruch 1. Ferner betrifft die Erfindung ein landwirtschaftliches Nutzfahrzeug sowie ein Verfahren zur Steuerung und/oder Regelung eines landwirtschaftlichen Nutzfahrzeuges.

Derartige Systeme werden für landwirtschaftliche Nutzfahrzeuge zum Ausbringen von Material, wie Düngemittel, Pflanzenschutzmittel oder Saatgut, verwendet. Um das Material großflächig und effizient auf dem zu bearbeitenden Feldboden auszubringen, weisen die landwirtschaftlichen Nutzfahrzeuge ein Verteilergestänge mit mehreren Sprühdüsen auf. Das Verteilergestänge erstreckt sich quer zur Fahrtrichtung und kann Arbeitsbreiten von bis zu 40 m aufweisen. Die Sprühdüsen, welche in regelmäßigem Abstand am Verteilergestänge angebracht sind, dienen der Ausbringung des Materials auf den zu bearbeitenden Boden. Dabei soll der Abstand zwischen dem Verteilergestänge und dem Boden über die gesamte Arbeitsbreite möglichst konstant bleiben. Das bedeutet, dass das Verteilergestänge möglichst parallel zum zu bearbeitenden Boden gehalten wird.

Bekanntermaßen weist das Verteilergestänge ein Mittelteil, beispielhaft einen mittig angeordneten Rahmen, und zwei mit dem Mittelteil verbundene seitliche Ausleger mit mehreren zueinander in Transportstellung einklappbaren und in Arbeitsstellung ausklappbaren, durch Gelenke verbundenen Gestängeabschnitten auf. Jedem Gestängeabschnitt ist bekanntermaßen eine Stelleinrichtung zugeordnet, wodurch das Verteilergestänge von einer Transportstellung in eine Arbeitsstellung überführbar ist.

Aufgrund der großen Arbeitsbreite und seitlichen Erstreckung des Verteilergestänges kann es im Arbeitsbetrieb des Nutzfahrzeuges, beispielshaft beim Abbremsen oder Beschleunigen, zu einem Aufschwingen des Verteilergestänges kommen. Die damit einhergehende unkontrollierte Bewegung des Verteilergestänges verursacht nicht nur eine inhomogene Verteilung des auszubringenden Materials auf dem Feldboden. Bei starken Beschleunigungskräften kann es überdies zur Überlastung des Verteilergestänges kommen, wodurch dieses in extremen Fällen irreparabel beschädigt wird. Weiterhin kann es insbesondere bei Kurvenfahrten aufgrund der großen Arbeitsbreite zu einem Auftreten von starken Beschleunigungskräften um die Hochachse des Verteilergestänges kommen. Eine ähnliche Überlastung des Verteilergestänges kann auch durch die Kollision mit einem Hindernis verursacht werden.

Der Erfindung liegt daher die Aufgabe zugrunde, ein Steuer- und/oder Regelsystem für ein landwirtschaftliches Nutzfahrzeug anzugeben, bei dem eine Überlastung des Verteilergestänges effizient minimiert werden kann. Der Erfindung liegt ferner die Aufgabe zugrunde, ein landwirtschaftliches Nutzfahrzeug sowie ein Verfahren zur Steuerung und/oder Regelung eines landwirtschaftlichen Nutzfahrzeuges anzugeben.

Diese Aufgabe wird erfindungsgemäß durch ein Steuer- und/oder Regelsystem mit den Merkmalen des Anspruchs 1 gelöst. Im Hinblick auf das landwirtschaftliche Nutzfahrzeug wird die Aufgabe durch den Gegenstand des Anspruchs 10 gelöst. Ferner wird die Aufgabe im Hinblick auf das Verfahren durch die Gegenstände der Ansprüche 11 und 15 gelöst.

Die Erfindung beruht auf dem Gedanken, ein Steuer- und/oder Regelsystem für ein landwirtschaftliches Nutzfahrzeug anzugeben. Das landwirtschaftliche Nutzfahrzeug umfasst ein Verteilergestänge zum Ausbringen von Material, wie Düngemittel, Pflanzenschutzmittel oder Saatgut, welches sich quer zur Fahrtrichtung erstreckt. Das Verteilergestänge weist ein Mitteilteil und zwei mit dem Mittelteil verbundene seitliche Ausleger mit mehreren zueinander in Transportstellung einklappbaren und in Arbeitsstellung ausklappbaren, durch Gelenke verbundene Gestängeabschnitte auf. Jedem Gestängeabschnitt ist eine Stelleinrichtung, umfassend wenigstens eine Schaltventileinheit und wenigstens eine Stell-Ventileinheit, zugeordnet, wodurch das Verteilergestänge von einer Transportstellung in eine Arbeitsstellung überführbar ist und die Gelenke in der Arbeitsstellung durch eine Haltekraft fixierbar sind. Weiterhin weist das System eine Datenverarbeitungseinheit auf, die mit der jeweiligen Stelleinrichtung signalverbunden oder signalverbindbar ist. Die Datenverarbeitungseinheit ist derart konfiguriert, dass mittels eines Stellsignals die Haltekraft der Gelenke durch die Stelleinrichtung aufgebracht wird, wobei die Haltekraft auf einen Maximalwert zur Begrenzung der Überlastung der Stelleinrichtung und/oder zur Begrenzung von am Verteilergestänge auftretenden Kräften einstellbar ist.

Im Rahmen der Anmeldung kann der Begriff der Stelleinrichtung sowohl hydraulische als auch pneumatische, elektrische oder mechanische Systeme umfassen. Es ist hierbei generell denkbar, dass die Stelleinrichtung Stellorgane, wie beispielsweise Hydraulikzylinder und/oder Ventileinheiten und/oder weitere Komponenten, wie beispielswiese Federdämpfersysteme umfasst.

Die Erfindung hat den Vorteil, dass die Haltekraft der Gelenke der Gestängeabschnitte durch die Sicherstellung eines Maximalwertes einen bestimmten Grenzwert nicht übersteigen kann. Es werden daher Überlastungen des Verteilergestänges bei zu hohen Kräften auf die Gelenke durch die Begrenzung mittels des Maximalwertes vermieden. Die Haltekraft des jeweiligen Gelenks beschreibt die notwendige Gesamtkraft des Gelenks, wodurch die Gestängeabschnitte in einer geradlinig verlaufenden Arbeitsstellung gehalten oder bei Bedarf zurückgeführt werden können. Erfindungsgemäß sollen die Kräfte auf die jeweiligen Gelenke der Gestängeabschnitte und generell auf das Verteilergestänge möglichst reduziert werden. Durch die Einstellung eines Maximalwertes können somit Beschädigungen effizient verhindert werden.

Die Erfindung hat weiterhin den Vorteil, dass durch die Einstellung eines Maximalwertes, die Gelenke im Betrieb des landwirtschaftlichen Nutzfahrzeuges dennoch ausreichend starr mit dem Verteilergestänge verbunden sein können. Somit können die Gelenke im Betrieb optimal in der Arbeitsstellung gehalten und gleichzeitig eine Überlastung verhindert werden.

Bevorzugte Ausführungsformen der Erfindung sind in den Unteransprüchen gegeben.

Vorzugsweise ist der Maximalwert der Haltekraft auf einen festgelegten Wert oder einen variabel einstellbaren Wert je nach Betriebszustand und/oder Umwelteinfluss einstellbar. Beispielhaft ist es möglich, mittels Sensoren verschiedene Situationen frühzeitig zu erkennen, bei denen es erforderlich sein kann, die Haltekraft der Gelenke auf einen Maximalwert einzustellen, damit eine Überlastung der Stelleinrichtung und/oder am Verteilergestänge auftretende Kräfte begrenzt bzw. reduziert werden können. Somit kann die Haltekraft der Gelenke der Gestängeabschnitte zu möglichst jedem erforderlichen Zeitpunkt effizient eingestellt werden. Die Einstellung der Haltekraft erfolgt dabei vorzugsweise in Situationen, abhängig von einem Betriebszustand des landwirtschaftlichen Nutzfahrzeuges und/oder verschiedenen Umwelteinflüssen, bei denen es wünschenswert oder notwendig ist, die Gelenke einerseits möglichst starr zueinander zu verspannen, damit sie optimal in einer Arbeitsstellung gehalten werden und andererseits auf einen Maximalwert der Haltekraft zu begrenzen. Die Haltekraft kann mittels des variabel einstellbaren Wertes insgesamt flexibel eingestellt werden.

Vorzugsweise ist der Maximalwert der Haltekraft in Abhängigkeit von auftretenden Beschleunigungen des Verteilergestänges und/oder des landwirtschaftlichen Nutzfahrzeuges und/oder Erschütterungen aufgrund von Bodenunebenheiten und/oder Kurvenfahrten des landwirtschaftlichen Nutzfahrzeuges und/oder auftretenden Schwingungen des Verteilergestänges und/oder einer Kollision mit einem Hindernis und/oder dem Betrieb des Nutzfahrzeuges, insbesondere an einem Vorgewende, und/oder generell auftretenden Überlastungen des Verteilergestänges einstellbar. Bei derartigen Situationen ist es von besonderem Vorteil, die Haltekraft der Gelenke der Gestängeabschnitte auf einen Maximalwert einzustellen, um einer Überlastung des Verteilergestänges vorzubeugen. Andernfalls kann es zu unerwünschten Beschädigungen des Verteilergestänges kommen. Insgesamt kann eine große Vielfalt an möglichen Störfällen im Betrieb des landwirtschaftlichen Nutzfahrzeuges auf dem zu bearbeitenden Boden umfasst werden, so dass die Gelenke der Gestängeabschnitte nahezu zu jeder Zeit möglichst störungsfrei in der Arbeitsstellung gehalten werden können und im Bedarfsfall schnellstmöglich in die Arbeitsstellung zurückgeführt werden können. Die Erfindung ist hierbei nicht auf die genannten unerwünschten Störfälle begrenzt, sondern auf jeglichen Betriebszustand und/oder Umwelteinfluss erweiterbar, in denen es von besonderem Vorteil ist, die Haltekraft der Gelenke der Gestängeabschnitte anzupassen und auf einen Maximalwert einzustellen. Vorzugsweise ist den jeweiligen Stelleinrichtungen dazu wenigstens ein zentrales Druckbegrenzungsventil zugeordnet.

In einer bevorzugten Ausführungsform ist der Maximalwert der Haltekraft mittels eines maximalen Drucks an der Stelleinrichtung, insbesondere von bis zu 200 bar, definiert. Es kann hierbei ein vorteilhafter Grenzwert definiert werden, so dass idealerweise keine unerwünschten Überlastungen des Verteilergestänges auftreten.

In einer bevorzugten Ausführungsform sind die Gelenke mittels der Haltekraft verspannbar, derart, dass die Gelenke bei einer auftretenden Auslenkung in die Arbeitsstellung rückführbar sind. Somit kann ein unerwünschtes Einklappen der Gestängeabschnitte bzw. ein Zueinander-Instabilwerden der Gestängeabschnitte effizient verhindert werden.

In einer besonders bevorzugten Ausführungsform weist die Stelleinrichtung wenigstens einen Hydraulikzylinder, eine Hydraulikleitung, welche zur Zufuhr von Hydraulikflüssigkeit an den wenigstens einen Hydraulikzylinder angeschlossen ist, die wenigstens eine Schaltventileinheit zur Einstellung eines Maximalwertes und die wenigstens eine dem Hydraulikzylinder zugeordnete Stell-Ventileinheit zur Klappung des jeweiligen Gestängeabschnitts auf. Dabei können die Ventileinheiten jeweils über ein Stellsignal der Datenverarbeitungseinheit einstellbar, bzw. verstellbar sein. Das Stellsignal bewirkt, anders gesagt, eine Zustandsänderung der Stelleinrichtung, wobei der Hydraulikzylinder derart verstellt werden kann, dass ein Maximaldruck bzw. ein Maximalwert eingestellt werden kann. Dabei kann die Stelleinrichtung generell als Aktor ausgebildet sein, um die elektrischen Stellsignale der Datenverarbeitungseinheit in eine mechanische Bewegung umzuwandeln. Der Einsatz einer Hydraulikflüssigkeit hat generell den Vorteil, dass die Reibung innerhalb der Stelleinrichtung vermindert ist und gleichzeitig Korrosionsschutz gewährleistet werden kann.

In einer bevorzugten Ausführungsform ist den jeweiligen Stelleinrichtungen wenigstens ein zentrales Druckbegrenzungsventil zugeordnet. Somit kann eine zentrale Überlastsicherung gewährleistet werden. Der maximale Druck bzw. der einstellbare Maximalwert an den Hydraulikzylindern ist somit über das zentrale Druckbegrenzungsventil für den kompletten Hydraulikkreislauf begrenzbar.

In einer weiteren bevorzugten Ausführungsform ist den jeweiligen Stelleinrichtungen alternativ oder zusätzlich zum zentralen Druckbegrenzungsventil wenigstens ein zentraler Hydraulikspeicher und ein Rückschlagventil, welches dem Hydraulikspeicher zugeordnet ist, und/oder wenigstens ein anschließbarer Verbraucher zugeordnet. Vorteilhafterweise können somit auch andere anschließbare Verbraucher oder Hydraulikspeicher in der Druckversorgung die Hydraulikflüssigkeit aus den Hydraulikzylindern aufnehmen und eine Begrenzung des Maximaldrucks bewirken.Dem wenigstens einen Hydraulikzylinder ist weiter vorzugsweise zumindest eine verstellbare Drossel zugeordnet. Die zumindest eine Drossel kann dem einen Hydraulikzylinder auf der Kolbenseite und/oder auf der Ringseite zugeordnet sein. Die verstellbare Drossel dient der Regulierung des Mengenstroms der Hydraulikflüssigkeit in den Hydraulikzylinder. Dadurch ist über die verstellbare Drossel in vorteilhafter Weise die Verfahrgeschwindigkeit des Zylinders einstellbar.

Weiter vorzugsweise umfasst die Schaltventileinheit ein Druckregelventil und/oder Druckbegrenzungsventil und/oder eine verstellbare Drossel und/oder einen Hydraulikspeicher, wobei die Schaltventileinheit von der Datenverarbeitungseinheit mittels eines Stellsignals steuerbar ist. Mittels derartiger Ventile kann sich vorteilhafterweise eine Kraftregelung realisieren lassen. Anders gesagt, kann sich mit Hilfe der Ventile der Druck bzw. die Kraft an den Hydraulikzylindern auf einen Maximalwert einstellen lassen. Dabei können vorzugsweise die Ventile mittels eines elektronischen Stellsignals von der Datenverarbeitungseinheit eingestellt werden.

Besonders bevorzugt ist das Druckregelventil und/oder Druckbegrenzungsventil und/oder die verstellbare Drossel und/oder der Hydraulikspeicher dem Hydraulikzylinder derart zugeordnet, dass ein Druck an einer Kolben- und/oder Ringseite des Hydraulikzylinders auf einen Maximalwert einstellbar ist. Beispielhaft kann hierzu die Schaltventileinheit eine Drossel und ein Druckbegrenzungsventil umfassen, welche dem Hydraulikzylinder derart zugeordnet sind, dass der Druck an einer Kolbenseite des Hydraulikzylinders auf einen Maximalwert einstellbar ist. Es können weiterhin zwei Drosseln und ein Druckbegrenzungsventil vorgesehen sein, wodurch der Druck an einer Ring- und Kolbenseite des Hydraulikzylinders einstellbar ist. Ebenso ist es denkbar, dass die Schaltventileinheit zwei verstellbare Drosseln, ein Druckbegrenzungsventil und zwei Hydraulikspeicher umfasst, welche dem Hydraulikzylinder derart zugeordnet sind, dass der Druck an der Ring- und Kolbenseite des Hydraulikzylinders auf einen Maximalwert einstellbar ist.

Weiter vorzugsweise umfasst das System mehrere Sensoren, welche dem Verteilergestänge zugeordnet sind, wobei die Sensoren mit der Datenverarbeitungseinheit signalverbindbar sind und, basierend auf den Messsignalen der Sensoren, ein Stellsignal für die jeweilige Stelleinrichtung von der Datenverarbeitungseinheit generierbar ist. Die wenigstens eine Stellventileinheit zur Klappung des jeweiligen Gestängeabschnitts ist derart eingestellt, dass ein Öffnen im Betrieb des landwirtschaftlichen Nutzfahrzeuges, basierend auf den Messsignalen der Sensoren je nach Betriebszustand und/oder Umwelteinfluss, einstellbar ist. Vorteilhafterweise werden die Stellventileinheiten zur Klappung des jeweiligen Gestängeabschnitts erst geöffnet, wenn sich aus Parametern und/oder den Messsignalen der Sensoren ein Fahrzeugzustand ableiten lässt, bei dem es zu einer Überlastung des Verteilergestänges kommen kann, wenn beispielsweise eine definierte Drehrate des Verteilergestänges um die Hochachse und/oder ein vorhandener Druck in den Hydraulikzylindern überschritten wird. Ein derartiger Zustand kann aber auch abhängig vom Fahrzeugstatus erfasst werden. Insbesondere treten derartige Drehraten um die Hochachse des Verteilergestänges vorrangig am Vorgewende des zu bearbeitenden Feldes, insbesondere beim Wenden des landwirtschaftlichen Nutzfahrzeuges, auf. Abhängig von den verschiedenen Fahrzeugparametern, wie beispielsweise einer GPS-Teilbreitenschaltung oder einer manuell betätigten Zustandsänderung durch den Anwender, kann erfasst werden, ob sich das Verteilergestänge an einem Vorgewende befindet und die Stellventileinheiten in eine entsprechende Position gebracht werden müssen. Die Einstellung des Öffnens der Stellventileinheiten im Betrieb des landwirtschaftlichen Nutzfahrzeuges, basierend auf den Messsignalen der Sensoren, hat insbesondere den Vorteil, dass die Stellventileinheiten nicht dauerhaft bestromt werden müssen. Da generell nur eine begrenzte elektrische Stromversorgung zur Verfügung steht, kann eine dauerhafte Stromaufnahme durch die Stellventileinheiten verhindert werden.

Da typische Verteilergestänge eine große Anzahl Stellventileinheiten umfassen können, besteht bei einer dauerhaften Stromaufnahme der Stellventileinheiten zur Aufrechterhaltung eines Schaltzustands stets die Gefahr, dass die begrenzte zur Verfügung stehende Stromversorgung nicht ausreichend ist, um einen ordnungsgemäßen Betrieb des Nutzfahrzeugs zu gewährleisten. Dadurch kann die Arbeitsqualität sinken und/oder das Nutzfahrzeug beschädigt werden. Somit ist das bedarfsgerechte Schalten der Stellventileinheiten von besonderem Vorteil.

Vorzugsweise sind die Sensoren derart ausgebildet und/oder im angrenzenden Bereich an den jeweiligen Gestängeabschnitt angeordnet, dass eine Position und/oder eine Winkelstellung des jeweiligen Gestängeabschnitts erfassbar ist und/oder die Sensoren sind derart ausgebildet und/oder am Verteilergestänge angeordnet, dass der Druck in der jeweiligen Stelleinrichtung erfassbar ist, und/oder die Sensoren sind derart ausgebildet und/oder am Verteilergestänge angeordnet, dass eine auftretende Beschleunigung der Ausleger des Verteilergestänges ermittelbar ist. Die Sensoren können hierbei insbesondere als Potentiometer, Drehratensensoren, Winkelsensoren, Beschleunigungssensoren oder Drucksensoren ausgebildet sein. Es können in der Datenverarbeitungseinheit beispielshaft die Messsignale von unterschiedlichen Sensoren kombiniert werden, um ein Stellsignal für die jeweilige Stelleinrichtung zu generieren. Vorteilhafterweise ist mittels der Messsignale der Sensoren ein Betriebszustand und/oder Umwelteinfluss erfassbar, bei dem es zu einer Überlastung der Hydraulikzylinder bzw. des Verteilergestänges kommen kann. Somit kann eine Überlastsicherung der Hydraulikzylinder bzw. des Verteilergestänges realisiert werden.

Im Rahmen der vorliegenden Anmeldung wird weiterhin ein landwirtschaftliches Nutzfahrzeug zum Ausbringen von Material, wie Düngemittel, Pflanzenschutzmittel oder Saatgut, mit einem Steuer- und/oder Regelsystem nach einer der vorhergehenden Ausführungsformen beansprucht.

Weiterhin wird im Rahmen der vorliegenden Anmeldung ein Verfahren zur Steuerung und/oder Regelung eines landwirtschaftlichen Nutzfahrzeuges beansprucht, welches ein Steuer- und/oder Regelsystem nach einer der vorhergehenden Ausführungsformen aufweist, bei dem die Datenverarbeitungseinheit ein Stellsignal für die Stelleinrichtung generiert, wodurch die Haltekraft der Gelenke mittels der Stelleinrichtung aufgebracht wird, und wobei die Haltekraft auf einen Maximalwert zur Begrenzung der Überlastung der Stelleinrichtung und/oder zur Begrenzung von am Verteilergestänge auftretenden Kräften eingestellt wird.

Bevorzugt wird der Maximalwert der Haltekraft auf einen festgelegten Wert oder einen variabel einstellbaren Wert je nach Betriebszustand und/oder Umwelteinfluss eingestellt.

Weiter vorzugsweise wird der Maximalwert der Haltekraft in Abhängigkeit von auftretenden Beschleunigungen des Verteilergestänges und/oder des landwirtschaftlichen Nutzfahrzeuges und/oder Erschütterungen aufgrund von Bodenunebenheiten und/oder Kurvenfahrten des landwirtschaftlichen Nutzfahrzeuges und/oder auftretenden Schwingungen des Verteilergestänges und/oder einer Kollision mit einem Hindernis und/oder dem Betrieb des Nutzfahrzeuges, insbesondere an einem Vorgewende, und/oder generell auftretenden Überlastungen des Verteilergestänges eingestellt.

Weiter vorzugsweise werden die Gelenke mittels der Haltekraft verspannt, derart, dass die Gelenke bei einer auftretenden Auslenkung in die Arbeitsstellung rückgeführt werden.

In einer bevorzugten Ausführungsform wird die wenigstens eine Stellventileinheit zur Klappung des jeweiligen Gestängeabschnitts derart eingestellt, dass sie im Betrieb des landwirtschaftlichen Nutzfahrzeuges dauerhaft geöffnet ist oder ein Öffnen, basierend auf den Messsignalen der Sensoren, je nach Betriebszustand und/oder Umwelteinfluss eingestellt wird.

Weiterhin wird im Rahmen der vorliegenden Anmeldung ein Verfahren zur Steuerung und/oder Regelung eines landwirtschaftlichen Nutzfahrzeuges beansprucht, welches ein Steuer- und/oder Regelsystem nach einer der vorhergehenden Ausführungsformen aufweist, bei dem zur Begrenzung der Überlastung der Stelleinrichtung und/oder zur Begrenzung von am Verteilergestänge auftretenden Kräften ein Druckausgleich über ein zentrales Druckbegrenzungsventil und/oder einen zentralen Hydraulikspeicher und ein Rückschlagventil, welches dem Hydraulikspeicher zugeordnet ist, und/oder über wenigstens einen anschließbaren Verbraucher erfolgt.

Es wird ferner die Verwendung eines zentralen Druckbegrenzungsventils für ein Steuer- und/oder Regelsystem nach einer der vorhergehenden Ausführungsformen zur Begrenzung der Überlastung der Stelleinrichtung und/oder zur Begrenzung von am Verteilergestänge auftretenden Kräften offenbart.

Alternativ oder zusätzlich zu einem zentralen Druckbegrenzungsventil kann für ein Steuer- und/oder Regelsystem nach einer der vorhergehenden Ausführungsformen zur Begrenzung der Überlastung der Stelleinrichtung und/oder zur Begrenzung von am Verteilergestänge auftretenden Kräften die Verwendung eines zentralen Hydraulikspeichers und eines Rückschlagventils, welches dem Hydraulikspeicher zugeordnet ist, und/oder wenigstens eines anschließbaren Verbrauchers vorgesehen sein.

Zu den Vorteilen des landwirtschaftlichen Nutzfahrzeuges, der Verfahren zur Steuerung und/oder Regelung eines landwirtschaftlichen Nutzfahrzeuges, und der Verwendung des zentralen Druckbegrenzungsventils und/oder des zentralen Hydraulikspeichers und des Rückschlagventils und/oder wenigstens eines anschließbaren Verbrauchers wird auf die im Zusammenhang mit dem Steuer- und/oder Regelsystem erläuterten Vorteile verwiesen. Darüber hinaus können das landwirtschaftliche Nutzfahrzeug, die Verfahren und die Verwendung alternativ oder zusätzlich einzelne oder eine Kombination mehrerer zuvor in Bezug auf das Steuer- und/oder Regelsystem genannter Merkmale aufweisen.

Die Erfindung wird nachstehend mit weiteren Einzelheiten unter Bezug auf die beigefügten schematischen Zeichnungen näher erläutert. Die dargestellten Ausführungsformen stellen Beispiele dar, wie das erfindungsgemäße Steuer- und/oder Regelsystem ausgestaltet sein kann. Darin zeigen:
- Fig. 1: eine schematische Draufsicht auf ein landwirtschaftliches Nutzfahrzeug mit einem erfindungsgemäßen Steuer- und/oder Regelsystem,
- Fig. 2: einen schematischen Hydraulikschaltplan für ein Steuer- und/oder Regelsystem gemäß einem ersten erfindungsgemäßen Ausführungsbeispiel,
- Fig. 3: den schematischen Hydraulikschaltplan aus Fig. 2 mit veränderten Ventilstellungen,
- Fig. 4: einen schematischen Hydraulikschaltplan für ein Steuer- und/oder Regelsystem gemäß einem weiteren erfindungsgemäßen Ausführungsbeispiel,
- Fig. 5: einen schematischen Hydraulikschaltplan für ein Steuer- und/oder Regelsystem gemäß einem dritten erfindungsgemäßen Ausführungsbeispiel.

In der nachfolgenden Beschreibung werden für gleiche und gleichwirkende Teile dieselben Bezugszeichen verwendet.

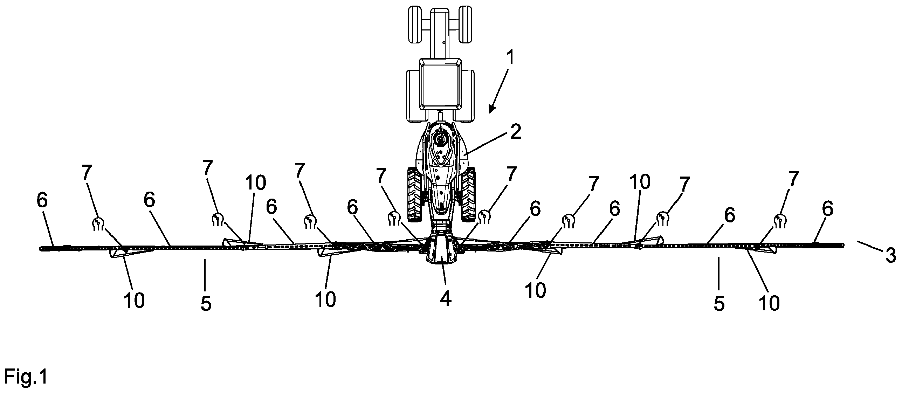

Fig. 1 zeigt eine schematische Draufsicht auf ein landwirtschaftliches Nutzfahrzeug 1 mit einem erfindungsgemäßen Steuer- und/oder Regelsystem. Das landwirtschaftliche Nutzfahrzeug 1 umfasst ein Verteilergestänge 3 zum Ausbringen von Material, wie Düngemittel, Pflanzenschutzmittel oder Saatgut. Das Verteilergestänge 3 ist über einen Anhänger 2 an das landwirtschaftliche Nutzfahrzeug 1 gekoppelt und mittels einer Aufhängvorrichtung am Anhänger 2 angebracht.

Das Verteilergestänge 3 erstreckt sich quer zur Fahrtrichtung und weist ein Mittelteil 4 und zwei seitliche Ausleger 5 auf, welche mit dem Mittelteil 4 verbunden sind. Die Ausleger 5 weisen mehrere in Transportstellung einklappbare und in Arbeitsstellung ausklappbare Gestängeabschnitte 6 auf. Die Gestängeabschnitte 6 sind durch Gelenke miteinander verbunden. Das Verteilergestänge 3 ist beispielhaft in der vollständig ausgeklappten Arbeitsstellung gezeigt.

Jedem Gestängeabschnitt 6 ist eine Stelleinrichtung zugeordnet, wodurch das Verteilergestänge 3 von einer Transportstellung in eine Arbeitsstellung und umgekehrt überführbar ist und die Gelenke in der Arbeitsstellung durch eine Haltekraft fixierbar sind. Die Stelleinrichtung kann beispielhaft einen doppelt wirkenden Hydraulikzylinder aufweisen. Weiterhin umfasst die Stelleinrichtung wenigstens eine Schaltventileinheit und wenigstens eine Stellventileinheit.

Das System weist beispielhaft mehrere Sensoren auf. Die Sensoren sind als Potentiometer 7, beispielsweise als Linearpotentiometer oder Drehpotentiometer, ausgebildet und im angrenzenden Bereich an dem jeweiligen Gestängeabschnitt 6 angeordnet. Die Potentiometer 7 sind also jeweils den Gelenken zwischen zwei zueinander einklappbaren Gestängeabschnitten 6 zugeordnet und somit zwischen zwei zueinander einklappbaren Gestängeabschnitten 6 angeordnet. Alternativ können die Potentiometer 7 der jeweiligen Stelleinrichtung zugeordnet sein und beispielsweise eine Arbeitsstellung des Hydraulikzylinders ermitteln. Dabei kann die Arbeitsstellung des Hydraulikzylinders der Position der Kolbenstange des Hydraulikzylinders entsprechen.

Mittels der Potentiometer 7 kann sowohl eine Endlage oder eine Zwischenlage bzw. Zwischenstellung der Gelenke der Gestängeabschnitte 6 ermittelt werden. Somit können Rückschlüsse gezogen werden, ob die Gelenke noch starr miteinander verbunden sind und in der Arbeitsstellung gehalten sind.

Die Potentiometer 7 erfassen beispielhaft eine Position und/oder eine Winkelstellung zwischen zwei benachbart liegenden Gestängeabschnitten 6 zueinander. Über Datenleitungen oder kabellos können die Messsignale der Potentiometer 7 hinsichtlich der jeweiligen Position der Gestängeabschnitte 6 an eine nicht dargestellte Datenverarbeitungseinheit übermittelt werden, welche mit einem im Nutzfahrzeug 1 angeordneten Bordcomputer verbunden sein kann. Die Datenverarbeitungseinheit ist mit der jeweiligen Stelleinrichtung signalverbunden bzw. signalverbindbar.

Die Datenverarbeitungseinheit ist derart konfiguriert, dass mittels eines Stellsignals die Haltekraft der Gelenke durch die Stelleinrichtung aufgebracht wird, wobei die Haltekraft auf einen Maximalwert einstellbar ist.

Dadurch kann eine Begrenzung der Überlastung der Stelleinrichtung und/oder eine Begrenzung von am Verteilergestänge auftretenden Kräften gewährleistet werden. Die Stelleinrichtung und das Verteilergestänge können somit vor Beschädigungen geschützt werden.

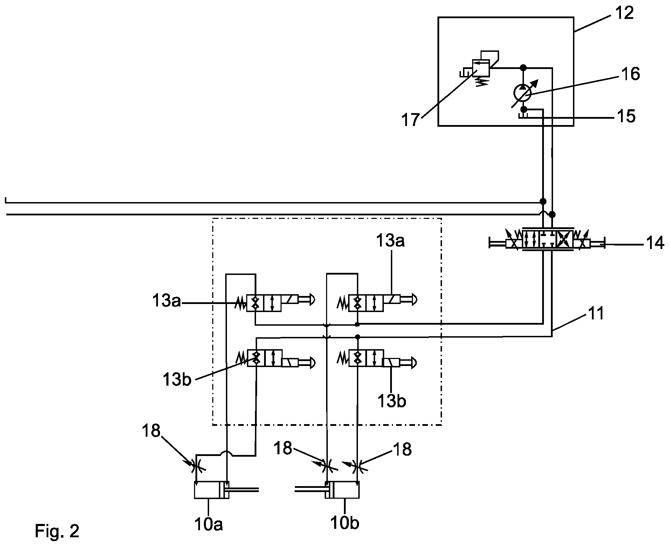

Fig. 2 zeigt einen schematischen Hydraulikschaltplan für ein erfindungsgemäßes Steuer- und/oder Regelsystem für ein landwirtschaftliches Nutzfahrzeug 1 nach einem ersten Ausführungsbeispiel. Es wird darauf hingewiesen, dass weitere Komponenten vorhanden sein können, aber für die einfache schematische Anordnung in der Fig. nicht dargestellt sind.

Dargestellt ist ein Hydraulikschaltplan für die Druckbeaufschlagung von beispielhaft zwei Stelleinrichtungen eines Verteilergestänges 3 gemäß Fig. 1. Die Stelleinrichtungen zur Überführung des Verteilergestänges 3 von einer Arbeits- in eine Transportstellung und umgekehrt sind zum Ein/Ausklappen, wie in Fig. 1 beschrieben, den Gestängeabschnitten 6 des Verteilergestänges 3 zugeordnet.

Die Stelleinrichtungen umfassen jeweils beispielhaft einen doppelt wirkenden Hydraulikzylinder 10 a,b und sind mittels einer zentralen Hydraulikleitung 11 verbunden. Über die Hydraulikleitung 11 sind die Hydraulikzylinder 10 a,b der jeweiligen Stelleinrichtung mit einem Hydraulikreservoir 12 verbunden. Das Hydraulikreservoir 12 enthält eine Hydraulikflüssigkeit, welche über die Hydraulikleitung 11 dem jeweiligen Hydraulikzylinder 10 a,b zugeführt werden kann. Das Hydraulikreservoir 12 umfasst einen Tank 15, eine Pumpe 16 und ein zentrales Druckbegrenzungsventil 17. Demnach liefert das Hydraulikreservoir 12 den erforderlichen Hydraulikdruck zur Druckbeaufschlagung der einzelnen Hydraulikzylinder 10 a,b.

Die Druckbeaufschlagung der einzelnen Hydraulikzylinder 10 a,b kann mittels eines zentralen Mehrwegeventils 14, insbesondere eines 4/3-Wegeventils, gesteuert werden. Das zentrale Mehrwegeventil 14 bestimmt somit, ob ein Hydraulikzylinder 10 a,b ein- oder ausfährt. Dazu ist das zentrale Mehrwegeventil 14 zwischen dem Hydraulikreservoir 12 und den Hydraulikzylindern 10 a,b in der Hydraulikleitung 11 angeordnet. Mittels des Mehrwegeventils 14 kann daher gesteuert werden, ob die nachgeschalteten Hydraulikzylinder 10 a,b aufgrund der Druckbeaufschlagung mit Hydraulikflüssigkeit ein- oder ausfahren. Weiterhin können zwischen dem Mehrwegeventil 14 und dem Hydraulikreservoir 12 weitere anschließbare Verbraucher angebracht sein. Das Mehrwegeventil 14 ist mittels eines elektronischen Stellsignals einer nicht dargestellten Datenverarbeitungseinheit steuerbar.

Die Stelleinrichtung umfasst weiterhin eine Stellventileinheit mit zwei Stellventilen 13 a,b. Je zwei Stellventile 13 a,b sind einem Hydraulikzylinder 10 a,b zugeordnet. Die Stellventile 13 a,b sind jeweils zwischen dem zugehörigen Hydraulikzylinder 10 a,b und dem Mehrwegeventil 14 in der Hydraulikleitung 11 angeordnet. Dabei ist jeweils das Stellventil 13b mit einer Kolbenseite des Hydraulikzylinders 10 a,b und das Stellventil 13a mit einer Ringseite des Hydraulikzylinders 10 a,b verbunden. Über die zugehörigen Stellventile 13 a,b kann durch eine Druckbeaufschlagung mit Hydraulikflüssigkeit bestimmt werden, welcher Hydraulikzylinder 10 a,b ein- oder ausfährt. Damit kann auch das Ein- bzw. Ausklappen des zugehörigen Gestängeabschnitts 6 gesteuert werden. Anders gesagt, kann mittels einer Auslenkung der Stellventile 13 a,b der Druck an der Ringseite oder Kolbenseite erhöht oder gesenkt werden.

In einer alternativen Ausführungsform kann vorgesehen sein, jedem Hydraulikzylinder 10 a,b ein Mehrwegeventil zuzuordnen, welches das Ein- oder Ausfahren des jeweiligen Hydraulikzylinders 10 a,b steuert.

Die Stelleinrichtung umfasst weiterhin eine Schaltventileinheit, deren Ansteuerung zur Begrenzung der Überlastung der Stelleinrichtung und zur Einstellung eines Maximalwertes dargestellt ist. Dem Hydraulikzylinder 10a ist eine verstellbare Drossel 18 auf der Kolbenseite zugeordnet. Die Drossel 18 dient der Regulierung des Mengenstroms der Hydraulikflüssigkeit in den Hydraulikzylinder 10a. Somit ist über die Drossel 18 die Verfahrgeschwindigkeit beim Ausfahren des Hydraulikzylinders 10a einstellbar.

Alternativ oder zusätzlich kann dem Hydraulikzylinder 10a auch eine Drossel 18 auf der Ringseite zugeordnet sein, wodurch die Verfahrgeschwindigkeit des Hydraulikzylinders 10a beim alternativ oder zusätzlich beim Einfahren einstellbar ist.

Dem Hydraulikzylinder 10b ist jeweils eine verstellbare Drossel 18 auf der Kolbenseite und der Ringseite zugeordnet. Über die verstellbaren Drosseln 18 ist die Verfahrgeschwindigkeit des Hydraulikzylinders 10b einstellbar. In einer alternativen Ausführungsform kann auf die verstellbaren Drosseln 18 verzichtet werden.

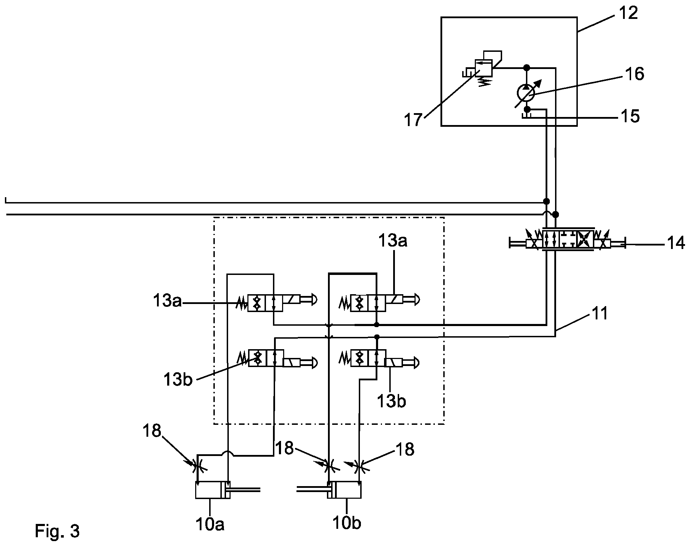

Fig. 3 zeigt den schematischen Hydraulikschaltplan aus Fig. 2 mit veränderten Ventilstellungen: Über das Mehrwegeventil 14 wird die zentrale Hydraulikleitung 11 mit Hydraulikflüssigkeit beaufschlagt. Über die Stellventile 13 a,b werden die Hydraulikzylinder 10 a,b betätigt. Sowohl das Mehrwegeventil 14 als auch die Stellventile 13 a,b ermöglichen das Fließen von Hydraulikflüssigkeit in beide Richtungen. Durch die Betätigung beider Stellventile 13 a,b eines Hydraulikzylinders 10 a,b stellt sich für ein Gleichgewichtsdruck zwischen den beiden Seiten des Hydraulikzylinders 10 a,b ein.

Wird der Druck auf einer Seite eines Hydraulikzylinders 10 a,b beispielsweise durch eine Störung erhöht, ist der maximal zulässige Druck über das zentrale Druckbegrenzungsventil 17 begrenzt. Übersteigt der Druck in einem der Hydraulikzylinder 10 a,b den durch das zentrale Druckbegrenzungsventil 17 vorgegebenen Maximalwert, kann Hydraulikflüssigkeit über das zentrale Druckbegrenzungsventil 17 abfließen. Beispielhaft kann der Maximalwert mittels des zentralen Druckbegrenzungsventils 17 auf 200 bar eingestellt sein. Auf diese Weise wird der Druck für den gesamten Hydraulikkreislauf begrenzt und eine Überlastsicherung für die Hydraulikzylinder 10 a,b gewährleistet.

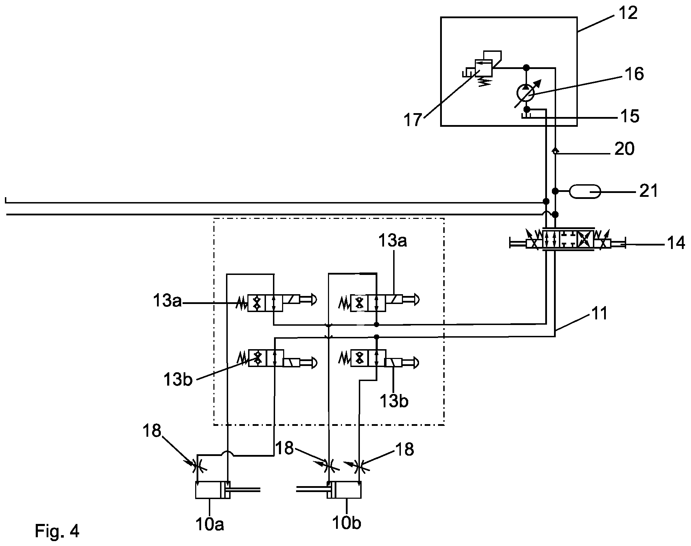

Fig. 4 zeigt einen schematischen Hydraulikschaltplan für ein erfindungsgemäßes Steuer- und/oder Regelsystem nach einem weiteren Ausführungsbeispiel. Der Grundaufbau und die Grundfunktion des Hydraulikschaltplans ist analog zu Fig. 2.

Zusätzlich zu dem Ausführungsbeispiel gemäß Fig. 2 ist zwischen dem Mehrwegeventil 14 und dem Hydraulikreservoir 12 ein zentraler Speicher 21 und ein Rückschlagventil 20 angeordnet. Das Rückschlagventil 20 ist dabei dem Speicher 21 zugeordnet. Der Speicher 21 wird somit über die Pumpe 16 mit einem Druck vorgeladen, dessen Maximalwert über das zentrale Druckbegrenzungsventil 17 bestimmt wird. Mittels dieser Anordnung wirkt der Speicher 21 zur Begrenzung einer Überlastung der Stelleinrichtung als Federelement. Wird der Druck auf einer Seite eines Hydraulikzylinders 10 a,b beispielsweise durch eine Störung erhöht, strömt Hydraulikflüssigkeit von dem Hydraulikzylinder 10 a,b in den Speicher 21. Alternativ oder zusätzlich kann diese in den Speicher 21 strömende Hydraulikflüssigkeit durch weitere Verbraucher im Hydraulikkreislauf verbraucht werden. Somit kann zur Begrenzung der Überlastung der Stelleinrichtung und zur Begrenzung von am Verteilergestänge 3 auftretenden Kräften ein Druckausgleich über den zentralen Speicher 21 und das Rückschlagventil 20 erfolgen.

Es ist ebenso generell denkbar, dass die Hydraulikleitung 11 aus einem Hydraulikschlauch gebildet ist, dessen Material elastisch ausgebildet ist. Somit kann der Hydraulikschlauch der Hydraulikleitung 11 als eine Art Speicher fungieren und für geringe Mengen an Hydraulikflüssigkeit verwendet werden.

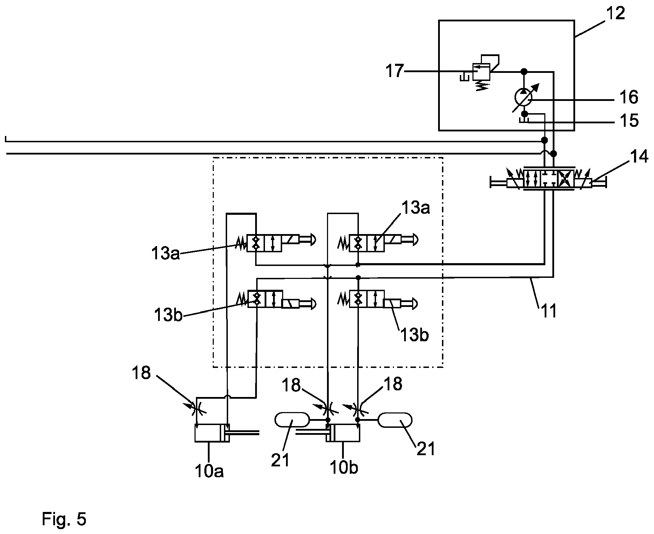

Fig. 5 zeigt einen schematischen Hydraulikschaltplan für ein erfindungsgemäßes Steuer- und/oder Regelsystem nach einem dritten Ausführungsbeispiel. Der Grundaufbau und die Grundfunktion ist analog zu Fig. 2.

Zusätzlich zu dem Ausführungsbeispiel gemäß Fig. 2 ist zwischen jeder Drossel 18 und dem Hydraulikzylinder 10b ein Speicher 21 angeordnet. Demnach sind die Speicher 21 direkt am Hydraulikzylinder 10b auf der Ringseite und auf der Kolbenseite angebracht. Wenn es zu einer Überlastung des Hydraulikzylinders 10b im Betrieb des landwirtschaftlichen Nutzfahrzeuges 1 kommen sollte, kann die Hydraulikflüssigkeit aus dem Hydraulikzylinder 10b in die Speicher 21 abgeführt werden. Diese fungieren demnach vergleichbar mit einer mechanischen Feder.

In analoger Weise können auch Speicher zwischen dem Hydraulikzylinder 10a und der Drossel 18 bzw. den Stellventilen 13 a,b angeordnet sein.

Weiterhin ist es generell denkbar, dass in Abhängigkeit von den Messsignalen der Sensoren bei Detektion eines Vorgewendes die Schaltventileinheiten und Stellventileinheiten derart von der Datenverarbeitungseinheit angesteuert werden, dass die Gestängeabschnitte 6 leicht eingeklappbar sind. Somit sind die Gestängeabschnitte 6 nicht mehr starr zueinander verspannt und instabil zueinander. Dadurch können die auftretenden Kräfte auf das Verteilergestänge 3 und die Gestängeabschnitte 6 bei einem Vorgewende nicht mehr direkt auf die Aufhängevorrichtung des Verteilergestänges 3 übertragen werden und einer Überlastung des Verteilergestänges 3 kann effektiv vorgebeugt werden.

Dazu sind das Mehrwegeventil 14 und die Stellventile 13 a,b derart anzusteuern, dass die in den Hydraulikzylindern 10 a,b befindliche Hydraulikflüssigkeit in Richtung des zentralen Druckbegrenzungsventils 17 abfließen kann. Übersteigt der resultierende Druck den Maximalwert des zentralen Druckbegrenzungsventils 17 kann die Hydraulikflüssigkeit über das zentrale Druckbegrenzungsventil abfließen.

### Bezuqszeichenliste

- 1: landwirtschaftliches Nutzfahrzeug
- 2: Anhänger
- 3: Verteilergestänge
- 4: Mittelteil
- 5: Ausleger
- 6: Gestängeabschnitt
- 7: Potentiometer
- 10a,b: Hydraulikzylinder
- 11: Hydraulikleitung
- 12: Hydraulikreservoir
- 13a,b: Stellventil
- 14: Mehrwegeventil
- 15: Tank
- 16: Pumpe
- 17: zentrales Druckbegrenzungsventil
- 18: Drossel
- 19: Druckbegrenzungsventil
- 20: Rückschlagventil
- 21: Speicher

## Patentansprüche

1. Steuer- und/oder Regelsystem für ein landwirtschaftliches Nutzfahrzeug (1) mit einem Verteilergestänge (3) zum Ausbringen von Material, wie Düngemittel, Pflanzenschutzmittel oder Saatgut, bei dem sich das Verteilergestänge (3) quer zur Fahrtrichtung erstreckt und ein Mittelteil (4) und zwei mit dem Mittelteil (4) verbundene seitliche Ausleger (5) mit mehreren zueinander in Transportstellung einklappbaren und in Arbeitsstellung ausklappbaren, durch Gelenke verbundene Gestängeabschnitte (6) aufweist, wobei jedem Gestängeabschnitt (6) eine Stelleinrichtung, umfassend wenigstens eine Schaltventileinheit und wenigstens eine Stell-Ventileinheit, zugeordnet ist, wodurch das Verteilergestänge (3) von einer Transportstellung in eine Arbeitsstellung überführbar ist und die Gelenke in der Arbeitsstellung durch eine Haltekraft fixierbar sind und wobei das System eine Datenverarbeitungseinheit aufweist, die mit der jeweiligen Stelleinrichtung signalverbunden oder signalverbindbar ist, wobei die Datenverarbeitungseinheit derart konfiguriert ist, dass mittels eines Stellsignals die Haltekraft der Gelenke durch die Stelleinrichtung aufgebracht wird, wobei die Haltekraft auf einen Maximalwert zur Begrenzung der Überlastung der Stelleinrichtung und/oder zur Begrenzung von am Verteilergestänge (3) auftretenden Kräften einstellbar ist.

2. System nach einem der vorhergehenden Ansprüche, **dadurch gekennzeichnet dass** der Maximalwert der Haltekraft in Abhängigkeit von auftretenden Beschleunigungen des Verteilergestänges (3) und/oder des landwirtschaftlichen Nutzfahrzeuges (1) und/oder Erschütterungen aufgrund von Bodenunebenheiten und/oder Kurvenfahrten des landwirtschaftlichen Nutzfahrzeuges (1) und/oder auftretenden Schwingungen des Verteilergestänges (3) und/oder einer Kollision mit einem Hindernis und/oder dem Betrieb des Nutzfahrzeuges (1), insbesondere an einem Vorgewende, und/oder generell auftretenden Überlastungen des Verteilergestänges (3) einstellbar ist.

3. System nach einem der vorhergehenden Ansprüche, **dadurch gekennzeichnet, dass** den jeweiligen Stelleinrichtungen wenigstens ein zentrales Druckbegrenzungsventil (17) zugeordnet ist.

4. System nach einem der vorhergehenden Ansprüche, **dadurch gekennzeichnet, dass** die Stelleinrichtung wenigstens einen Hydraulikzylinder (10 a,b), eine Hydraulikleitung (11), welche zur Zufuhr von Hydraulikflüssigkeit an den wenigstens einen Hydraulikzylinder (10 a,b) angeschlossen ist, die wenigstens eine Schaltventileinheit zur Einstellung eines Maximalwertes und die wenigstens eine dem Hydraulikzylinder (10 a,b) zugeordnete Stell-Ventileinheit zur Klappung des jeweiligen Gestängeabschnitts (6) aufweist.

5. System nach einem der vorhergehenden Ansprüche, **dadurch gekennzeichnet, dass** die Schaltventileinheit ein Druckregelventil und/oder Druckbegrenzungsventil (19) und/oder eine verstellbare Drossel (18) und/oder einen Hydraulikspeicher (21) umfasst, wobei die Schaltventileinheit von der Datenverarbeitungseinheit mittels eines Stellsignals steuerbar ist.

6. System nach Anspruch 5, **dadurch gekennzeichnet, dass** das Druckregelventil und/oder Druckbegrenzungsventil (19) und/oder die verstellbare Drossel (18) und/oder der Hydraulikspeicher (21) dem Hydraulikzylinder derart zugeordnet ist, dass ein Druck an einer Kolben- und/oder Ringseite des Hydraulikzylinders (10 a,b) auf einen Maximalwert einstellbar ist.

7. System nach einem der vorhergehenden Ansprüche, **dadurch gekennzeichnet, dass** den jeweiligen Stelleinrichtungen wenigstens ein zentraler Hydraulikspeicher (21) und ein Rückschlagventil (20), welches dem Hydraulikspeicher (21) zugeordnet ist, und/oder wenigstens ein anschließbarer Verbraucher zugeordnet ist.

8. System nach einem der vorhergehenden Ansprüche, **dadurch gekennzeichnet dass** das System mehrere Sensoren umfasst, welche dem Verteilergestänge (3) zugeordnet sind, wobei die Sensoren mit der Datenverarbeitungseinheit signalverbindbar sind und basierend auf den Messsignalen der Sensoren ein Stellsignal für die jeweilige Stelleinrichtung von der Datenverarbeitungseinheit generierbar ist und wobei die wenigstens eine Stell-Ventileinheit zur Klappung des jeweiligen Gestängeabschnitts (6) derart eingestellt ist, dass ein Öffnen im Betrieb des landwirtschaftlichen Nutzfahrzeuges (1) basierend auf den Messsignalen der Sensoren je nach Betriebszustand und/oder Umwelteinfluss einstellbar ist.

9. System nach Anspruch 8, **dadurch gekennzeichnet dass** die Sensoren derart ausgebildet und/oder im angrenzenden Bereich an den jeweiligen Gestängeabschnitt (6) angeordnet sind, dass eine Position und/oder eine Winkelstellung des jeweiligen Gestängeabschnitts (6) erfassbar ist und/oder die Sensoren derart ausgebildet und/oder am Verteilergestänge (3) angeordnet sind, dass der Druck in der jeweiligen Stelleinrichtung erfassbar ist und/oder die Sensoren derart ausgebildet und/oder am Verteilergestänge (3) angeordnet sind, dass eine auftretende Beschleunigung der Ausleger (5) des Verteilergestänges (3) ermittelbar ist.

10. Landwirtschaftliches Nutzfahrzeug (1) zum Ausbringen von Material, wie Düngemittel, Pflanzenschutzmittel oder Saatgut mit einem Steuer- und/oder Regelsystem nach einem der vorhergehenden Ansprüche.

11. Verfahren zur Steuerung und/oder Regelung eines landwirtschaftlichen Nutzfahrzeuges (1) mit einem Steuer- und /oder Regelsystem nach einem der Ansprüche 1 bis 9, bei dem die Datenverarbeitungseinheit ein Stellsignal für die Stelleinrichtung generiert, wodurch die Haltekraft der Gelenke mittels der Stelleinrichtung aufgebracht wird, und wobei die Haltekraft auf einen Maximalwert zur Begrenzung der Überlastung der Stelleinrichtung und/oder zur Begrenzung von am Verteilergestänge (3) auftretenden Kräften eingestellt wird.

12. Verfahren nach Anspruch 11, **dadurch gekennzeichnet, dass** der Maximalwert der Haltekraft in Abhängigkeit von auftretenden Beschleunigungen des Verteilergestänges (3) und/oder des landwirtschaftlichen Nutzfahrzeuges (1) und/oder Erschütterungen aufgrund von Bodenunebenheiten und/oder Kurvenfahrten des landwirtschaftlichen Nutzfahrzeuges (1) und/oder auftretenden Schwingungen des Verteilergestänges (3) und/oder einer Kollision mit einem Hindernis und/oder dem Betrieb des Nutzfahrzeuges (1), insbesondere an einem Vorgewende, und/oder generell auftretenden Überlastungen des Verteilergestänges (3) eingestellt wird.

13. Verfahren nach einem der Ansprüche 11 oder 12, **dadurch gekennzeichnet, dass** die wenigstens eine Stell-Ventileinheit zur Klappung des jeweiligen Gestängeabschnitts (6) derart eingestellt wird, dass sie im Betrieb des landwirtschaftlichen Nutzfahrzeuges (1) dauerhaft geöffnet ist oder ein Öffnen basierend auf den Messsignalen der Sensoren je nach Betriebszustand und/oder Umwelteinfluss eingestellt wird.

14. Verfahren zur Steuerung und/oder Regelung eines landwirtschaftlichen Nutzfahrzeuges (1) mit einem Steuer- und /oder Regelsystem nach einem der Ansprüche 1 bis 12, bei dem zur Begrenzung der Überlastung der Stelleinrichtung und/oder zur Begrenzung von am Verteilergestänge (3) auftretenden Kräften ein Druckausgleich über ein zentrales Druckbegrenzungsventil (17) erfolgt.

15. Verfahren nach Anspruch 19, bei dem zur Begrenzung der Überlastung der Stelleinrichtung und/oder zur Begrenzung von am Verteilergestänge (3) auftretenden Kräften ein Druckausgleich über einen zentralen Hydraulikspeicher (21) und ein Rückschlagventil (20), welches dem Hydraulikspeicher (21) zugeordnet ist, und/oder über wenigstens einen anschließbaren Verbraucher erfolgt.
